# EUROPÄISCHE PATENTANMELDUNG

(11) **EP 3 854 668 A1**
(43) Veröffentlichungstag der Anmeldung: **28.07.2021**
(21) Anmeldenummer: 21020022.6
(22) Anmeldetag: 20.01.2021
(51) Int. Cl.: B62K 11/00

(54) **SICHERHEITSMODUS FÜR SELBSTBALANCIERENDE FAHRZEUGE**

(30) Priorität: 21.01.2020 DE 102020101335
(71) Anmelder: Suess, Sandro, 91236 Alfeld (DE)
(72) Erfinder: Suess, Sandro, 91236 Alfeld (DE)
(74) Vertreter: Schneider, Andreas

(57) **Zusammenfassung**

Um die Sicherheit eines selbstbalancierenden Fahrzeuges (1) zu verbessern, welches Fahrzeug (1) wenigstens eine Trittfläche (5, 6) und zwei Antriebsräder (7, 8) aufweist, wobei die beiden Antriebsräder (7, 8) unabhängig voneinander antreibbar sind, zu welchem Zweck jedem der beiden Antriebsräder (7, 8) ein Elektromotor zugeordnet ist, wobei diese Elektromotoren von einem elektronischen Steuergerät ansteuerbar sind, das mit einer Anzahl Sensoreinheiten verbindbar ist, mit deren Hilfe die Trittflächenbelegung ermittelbar ist, wird ein Verfahren zum sicheren Betreiben des Fahrzeugs (1) vorgeschlagen, das dadurch gekennzeichnet ist, daß für den Fall, daß kein Fahrer auf der wenigstens einen Trittfläche (5, 6) steht, ein von einem Fahrbetriebsmodus verschiedener Sicherheitsmodus vorgesehen ist, in welchem Sicherheitsmodus die Bewegung des Fahrzeugs (1) mit Hilfe einer Grenzwertüberwachungseinrichtung auf ein Überschreiten wenigstens eines Bewegungsgrenzwertes hin überwacht wird und eine Maßnahme zum Beeinflussen der Bewegung des fahrerlosen Fahrzeugs (1) durchgeführt wird, wenn ein solches Überschreiten festgestellt wird.

## Beschreibung

Die Erfindung betrifft ein Verfahren zum sicheren Betrieb eines selbstbalancierenden Fahrzeuges. Darüber hinaus betrifft die Erfindung ein selbstbalancierendes Fahrzeug sowie ein elektronisches Motorsteuergerät für ein solches Fahrzeug.

Sogenannte selbstbalancierende Fahrzeuge mit zwei Rädern und elektromotorischem Antrieb sind aus dem Stand der Technik bekannt. Neben größeren Fahrzeugen mit Lenkstange sind seit einiger Zeit auch kleinere Fahrzeuge erhältlich, die keine Lenkstange aufweisen und in ihrer Grundform einem Brett ähneln. Diese werden u.a. als Hoverboards, Self Balance Boards oder Self Balance Scooter bezeichnet und weisen zwei Fahrzeughälften auf, die um eine zentrale Drehachse drehbar miteinander verbunden sind.

Die Steuerung dieser Fahrzeuge erfolgt auf bekannte Weise durch eine Gewichtsverlagerung des Fahrers auf den Trittflächen der beiden voneinander unabhängig neigbaren Fahrzeughälften des quer zur Fahrtrichtung liegenden Fahrzeuggehäuses. Eine Verlagerung des Gewichts nach vorn führt zu einer Fahrt des Fahrzeugs in Fahrtrichtung nach vorn bzw. zu einer Beschleunigung, während eine Verlagerung des Gewichts nach hinten das Fahrzeug abbremst bzw. das Fahrzeug rückwärts fahren läßt. Ein Lenken des Fahrzeugs erfolgt entsprechend durch eine unterschiedlich starke Belastung der Trittflächen bzw. durch ein Neigen der Trittflächen in gegensätzliche Neigungsrichtungen.

Zum Antrieb der Räder werden im Fahrbetrieb batteriebetriebene Elektromotoren von einem Motorsteuergerät angesteuert. Diese Ansteuerung erfolgt dabei auf der Grundlage der von Sensoren ermittelten Neigungswinkel der Trittflächen.

Darüber hinaus sind selbstbalancierende Fahrzeuge bekannt, die das oben beschriebene Konzept des zweiteiligen Aufbaus mit zueinander verdrehbaren Fahrzeughälften verlassen und einen einzigen durchgehenden, starren Tragrahmen aufweisen, an dessen beiden Enden jeweils separat elektromotorisch antreibbare Räder angebracht sind. Auf dem Tragrahmen sind die beiden Trittflächen angeordnet, die zur Steuerung des Antriebs und der Lenkung des Fahrzeugs über geeignete Drucksensoren verfügen, so daß eine Gewichtsverlagerung des Fahrers zwar zu einer Betätigung dieser Sensoren, nicht jedoch zu einer Relativbewegung der Fahrzeugteile zueinander führt. Mit anderen Worten erfolgt die Ansteuerung auf der Grundlage der von Sensoren ermittelten Druckbelastung der Trittflächen. Durch diese Art der Ansteuerung vereinfacht sich der konstruktive Aufbau des Fahrzeugs.

Unabhängig davon, ob die Ansteuerung des Fahrzeugs auf der Grundlage der erfaßten Neigungswinkel der Trittflächen oder der Druckbelastung der Trittflächen erfolgt, spielen sicherheitsrelevante Aspekte bei allen Fahrzeugen dieser Art eine immer größere Rolle, insbesondere vor dem Hintergrund einer angestrebten Straßenzulassung gemäß gesetzlicher Vorgaben. So soll unter anderem sichergestellt werden, daß nach einem Sturz oder einem ungewollten Absteigen des Fahrers das fahrerlose Fahrzeug nicht unkontrolliert weiterfährt. Auch soll vermieden werden, daß ein fahrbereites, aber fahrerloses Fahrzeug auf unebenem Untergrund von allein wegfährt.

Um zu verhindern, daß sich das Fahrzeug unmittelbar nach dem Einschalten in Bewegung setzt, da es aufgrund seines Bestrebens zum Ausbalancieren zu einer Ansteuerung der Elektromotoren und daher zu einer Drehung der Räder kommen kann, ist es seit langem bekannt, mit dem elektronischen Steuergerät verbundene Trittbrettsensoren zu verwenden, mit denen ermittelbar ist, ob sich ein Fahrer auf den Trittbrettern des Fahrzeugs befindet. Das Ausbalancieren des Fahrzeugs erfolgt bei diesen Fahrzeugen nur dann, wenn sich ein Fahrer auf dem Fahrzeug befindet. Nachteilig bei dieser Lösung war es, daß das Fahrzeug, um ein bequemes Aufsteigen des Fahrers auf das Fahrzeug zu ermöglichen, nach dem Einschalten zunächst mit der Hand oder dem Fuß so aufgerichtet werden mußte, daß sich eine vorzugsweise horizontale Lage der Trittflächen ergibt. Hierzu hatte die frühere Patentanmeldung DE 10 2017 119 355 A1 des Anmelders vorgeschlagen, zusätzlich zu einem Fahrbetriebsmodus einen Inbetriebnahmemodus vorzusehen, in welchem das Fahrzeug selbständig eine Aufrichtbewegung hin zu einer gewünschten, insbesondere horizontalen oder im wesentlichen horizontalen Lage eines oder beider Trittflächen vollführt. Ist diese gewünschte Lage erreicht, wird der Inbetriebnahmemodus abgeschaltet. Das Einschalten des Fahrbetriebsmodus erfolgt dann mit dem Auf steigen des Fahrers auf die Trittflächen.

Es ist ebenfalls bereits bekannt, selbstbalancierende Fahrzeuge so anzusteuern, daß sich die Fahrzeuge während des Auf- und Absteigens des Fahrers nur mit verringerter Intensität bzw. auf begrenzte Weise bewegen. Diese Maßnahme dient jedoch allein einer komfortablen Benutzung der Fahrzeuge und verhindert nicht, daß ein fahrerloses Fahrzeug, beispielsweise nach einem Sturz des Fahrers, unkontrolliert weiterfährt.

Eine Aufgabe der vorliegenden Erfindung ist es, die Handhabung eines solchen selbstbalancierenden Fahrzeuges zu verbessern und gleichzeitig den Betrieb eines solchen selbstbalancierenden Fahrzeuges deutlich sicherer zu machen, insbesondere während der Vorgänge des Auf- und Absteigens des Fahrers. Diese Aufgabe wird durch ein Verfahren nach Anspruch 1 bzw. ein Fahrzeug nach Anspruch 12 bzw. ein elektronisches Steuergerät nach Anspruch 13 gelöst. Vorteilhafte Ausführungen der Erfindung sind in den Unteransprüchen angegeben. Die im Folgenden im Zusammenhang mit dem erfindungsgemäßen Verfahren erläuterten Vorteile und Ausgestaltungen gelten sinngemäß auch für das erfindungsgemäße Fahrzeug sowie das elektronische Steuergerät und umgekehrt.

Das erfindungsgemäße Verfahren dient zum sicheren Betreiben eines selbstbalancierenden Fahrzeuges, welches Fahrzeug wenigstens eine Trittfläche und zwei Antriebsräder aufweist, wobei die beiden Antriebsräder unabhängig voneinander antreibbar sind, zu welchem Zweck jedem der beiden Antriebsräder ein Elektromotor zugeordnet ist, wobei diese Elektromotoren von einem elektronischen Steuergerät ansteuerbar sind, das mit einer Anzahl Sensoreinheiten verbindbar ist, mit deren Hilfe die Trittflächenbelegung ermittelbar ist. Das erfindungsgemäße Verfahren ist dadurch gekennzeichnet, daß für den Fall, daß auf keiner der Trittflächen ein Fahrer steht, ein von einem Fahrbetriebsmodus verschiedener Sicherheitsmodus vorgesehen ist, in welchem Sicherheitsmodus die Bewegung des Fahrzeugs mit Hilfe einer Grenzwertüberwachungseinrichtung auf ein Überschreiten wenigstens eines Bewegungsgrenzwertes hin überwacht wird, und eine Maßnahme zum Beeinflussen der Bewegung des fahrerlosen Fahrzeugs durchgeführt wird, wenn ein solches Überschreiten festgestellt wird.

Das erfindungsgemäße Fahrzeug ist zur Durchführung dieses Verfahrens ausgebildet. Insbesondere weist es für diesen Zweck wenigstens eine Trittfläche und zwei Antriebsräder auf, wobei die beiden Antriebsräder unabhängig voneinander antreibbar sind, zu welchem Zweck jedem der beiden Antriebsräder ein Elektromotor zugeordnet ist, wobei diese Elektromotoren von einem elektronischen Steuergerät ansteuerbar sind, das mit einer Anzahl Sensoreinheiten verbindbar ist, mit deren Hilfe die Trittflächenbelegung ermittelbar ist, und ist dadurch gekennzeichnet, daß für den Fall, daß auf keiner der Trittflächen ein Fahrer steht, ein von einem Fahrbetriebsmodus verschiedener Sicherheitsmodus vorgesehen ist, in welchem Sicherheitsmodus die Bewegung des Fahrzeugs mit Hilfe einer Grenzwertüberwachungseinrichtung auf ein Überschreiten wenigstens eines Bewegungsgrenzwertes hin überwacht wird, und eine Maßnahme zum Beeinflussen der Bewegung des fahrerlosen Fahrzeugs durchgeführt wird, wenn ein solches Überschreiten festgestellt wird.

Das erfindungsgemäße elektronische Steuergerät ist für ein selbstbalancierendes Fahrzeug ausgebildet, welches Fahrzeug wenigstens eine Trittfläche und zwei Antriebsräder aufweist, wobei die beiden Antriebsräder unabhängig voneinander antreibbar sind, zu welchem Zweck jedem der beiden Antriebsräder ein Elektromotor zugeordnet ist, wobei diese Elektromotoren von einem elektronischen Steuergerät ansteuerbar sind, das mit einer Anzahl Sensoreinheiten verbindbar ist, mit deren Hilfe die Trittflächenbelegung ermittelbar ist, dadurch gekennzeichnet, daß das elektronische Steuergerät derart ausgebildet ist, daß für den Fall, daß auf keiner der Trittflächen ein Fahrer steht, ein von einem Fahrbetriebsmodus verschiedener Sicherheitsmodus vorgesehen ist, in welchem Sicherheitsmodus die Bewegung des Fahrzeugs mit Hilfe einer Grenzwertüberwachungseinrichtung auf ein Überschreiten wenigstens eines Bewegungsgrenzwertes hin überwacht wird und eine Maßnahme zum Beeinflussen der Bewegung des fahrerlosen Fahrzeugs durchgeführt wird, wenn ein solches Überschreiten festgestellt wird.

Eine Kernidee der vorliegenden Erfindung ist es, einen von einem Fahrbetriebsmodus und einem eventuell ebenfalls vorhandenen Inbetriebnahmemodus verschiedenen Sicherheitsmodus vorzusehen, in welchem Sicherheitsmodus bei einer ungewollten Bewegung des Fahrzeugs eine Maßnahme zum Beeinflussen der Bewegung des fahrerlosen Fahrzeugs durchgeführt wird, wenn das Fahrzeug fahrerlos ist, sich also kein Fahrer auf dem Fahrzeug befindet. Eine Voraussetzung für eine Aktivierung dieses vorgesehenen Sicherheitsmodus oder für einen Wechsel in diesen Sicherheitsmodus ist mit anderen Worten, daß das Fahrzeug fahrerlos ist. Unter einer ungewollten Bewegung wird dabei jede Bewegung des fahrerlosen Fahrzeugs nach dem Überschreiten eines Bewegungsgrenzwertes des Fahrzeugs verstanden. Auf diese Weise wird mit der Erfindung ein selbstbalancierendes Fahrzeug geschaffen, dessen Betrieb gegenüber bekannten Fahrzeugen dieser Art deutlich sicherer ist, da ungewollte Bewegungen des fahrerlosen Fahrzeugs und hierdurch hervorgerufene Sach- oder Personenschäden verringert oder verhindert werden.

Die Erfindung betrifft nicht die bereits bekannte Grundfunktion des Ausbalancierens von selbstbalancierenden Fahrzeugen. Auch damit, daß das Ausbalancieren erst dann erfolgt, wenn ein Fahrer auf den Trittbrettern des Fahrzeugs steht, hat die Erfindung nichts zu tun, ebensowenig mit der "Aufrichten"-Funktion, wie sie in der DE 10 2017 119 355 A1 beschrieben ist. Statt dessen schlägt die Erfindung erstmals einen Sicherheitsmodus für selbstbalancierende Fahrzeuge vor, mit dem erreicht wird, daß ein fahrerloses Fahrzeug weniger oder keine ungewünschten Bewegungen vollführt. Zu diesem Zweck wird ein eigener, von dem Fahrbetriebsmodus unabhängiger Sicherheitsmodus vorgesehen, der nicht zur Durchführung des Fahrbetriebs dient, sondern ausschließlich dazu, die Bewegung des fahrerlosen Fahrzeugs, welches vorzugsweise gleichzeitig aufgerichtet ist, zu überwachen und erforderlichenfalls, nämlich bei einem Überschreiten eines Bewegungsgrenzwertes, eine geeignete Maßnahme zum Beeinflussen der Bewegung des fahrerlosen Fahrzeugs durchzuführen, um ungewollte Bewegungen des fahrerlosen Fahrzeugs zu verringern oder zu verhindern. Vorzugsweise soll durch eine solche geeignete Maßnahme das Fahrzeug möglichst schnell zum Anhalten gebracht werden (Fahrzeugstillstand) und/oder die Maßnahme soll so lange durchgeführt werden, bis das Fahrzeug zum Stillstand gebracht wurde.

Mit der Durchführung einer solchen geeigneten Maßnahme wird die Bewegung des fahrerlosen Fahrzeugs beeinflußt. Bei einer dieser geeigneten Maßnahmen handelt es sich um eine definierte Abschaltung des Fahrzeugantriebs. Um das Ausmaß von unkontrollierten Bewegungen des fahrerlosen Fahrzeugs zu verringern oder solche Bewegungen vollständig zu vermeiden, kann es sich bei einer dieser geeigneten Maßnahmen aber auch um ein kontrolliertes Bewegen des fahrerlosen Fahrzeugs unter Beibehaltung des Fahrzeugantriebs handeln, wobei es sich in einem solchen Fall insbesondere um ein kontrolliertes Abbremsen und/oder um ein kontrolliertes Lenken des fahrerlosen Fahrzeugs handelt. Ziel der Maßnahmen ist in allen Fällen die möglichst schnelle Umwandlung der Bewegungsenergie des Fahrzeugs in andere Energieformen. Damit soll das Fahrzeug so schnell wie möglich zum Stillstand gebracht werden. In einer bevorzugten Ausführungsform der Erfindung werden die Maßnahmen derart gewählt, daß sowohl die Antriebsräder des Fahrzeugs als auch das Fahrzeug möglichst schnell zum Stillstand gebracht werden.

Die Erfindung ist für unterschiedliche Arten von selbstbalancierenden Fahrzeugen einsetzbar. Insbesondere ist die Erfindung bei Fahrzeugen mit zwei Trittflächen einsetzbar, wobei diese Trittflächen typischerweise konstruktiv und räumlich voneinander getrennt ausgebildet sind, insbesondere bei Fahrzeugen mit zwei zueinander bewegbaren Fahrzeughälften. Die Erfindung ist aber auch bei Fahrzeugen mit zwei Trittflächen einsetzbar, die an einem einzigen starren Tragrahmen vorgesehen sind, wobei die Druckbelastung der Trittflächen zur Steuerung von Antrieb und Lenkung dient. Die Erfindung ist schließlich aber auch dann einsetzbar, wenn lediglich eine einzige gemeinsame Trittfläche für beide Füße eines Fahrers vorgesehen ist, wie dies beispielsweise dann der Fall sein kann, wenn durch geeignete Sensoren die durch den rechten Fuß des Fahrers hervorgerufene Druckbelastung von der durch den linken Fuß des Fahrers hervorgerufenen Druckbelastung getrennt ermittelbar ist.

Die Erfindung ist sowohl im Zusammenhang mit dem Aufsteigen des Fahrers auf das Fahrzeug als auch im Zusammenhang mit dem Absteigen des Fahrers von dem Fahrzeug anwendbar. Besonders vorteilhaft anwendbar ist die Erfindung im Zusammenhang mit einem unfreiwilligen Absteigen des Fahrers von dem Fahrzeug.

Zur Realisierung der Erfindung ist es im einfachsten Fall bei Vorhandensein geeigneter Trittflächensensoren lediglich notwendig, die Funktionsweise des elektronischen Steuergerätes zu verändern, beispielsweise durch eine Anpassung der Programmierung des Steuergerätes, während alle anderen Komponenten des Fahrzeugs unverändert blieben. Erforderlichenfalls müssen geeignete Trittflächensensoren noch ergänzt werden.

Ein Ausführungsbeispiel der Erfindung wird nachfolgend anhand der Zeichnungen näher erläutert. Hierbei zeigen:

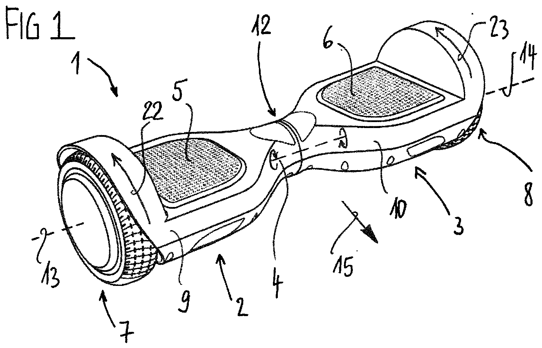

- Fig. 1: eine Darstellung eines selbstbalancierenden Fahrzeugs,

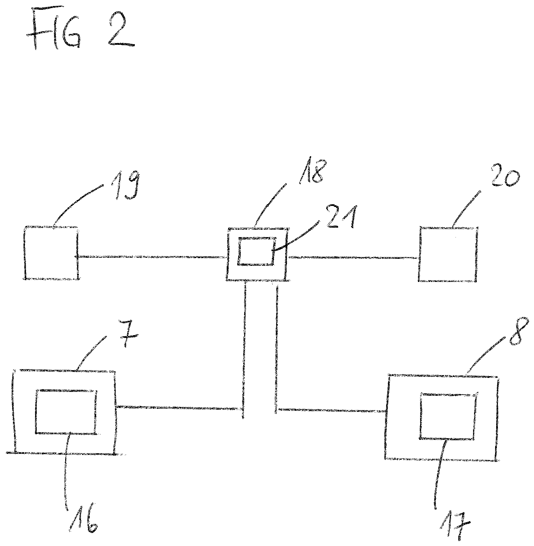

- Fig. 2: eine Darstellung von Funktionskomponenten des Fahrzeugs,

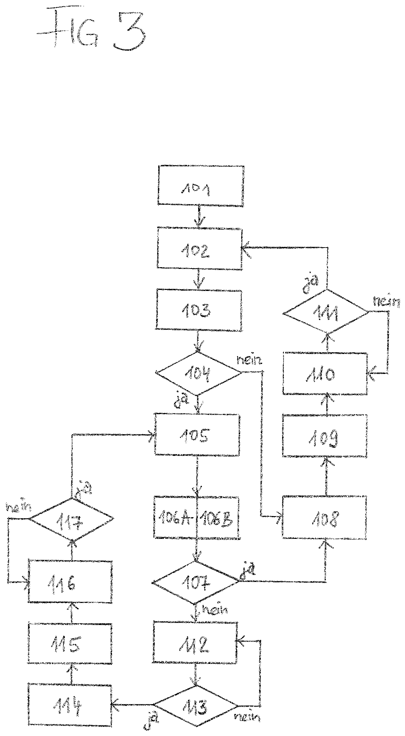

- Fig. 3: eine Abfolge von Verfahrensschritten,
- Fig. 4: den Zusammenhang zwischen der Drehgeschwindigkeit des Motors und dem Neigungswinkel des Fahrzeugs gegenüber dem Gravitationspunkt in einem Fahrbetriebsmodus,
- Fig. 5: den Zusammenhang zwischen der Drehgeschwindigkeit des Motors und dem Neigungswinkel des Fahrzeugs gegenüber dem Gravitationspunkt in einem Sicherheitsmodus,
- Fig. 6: den Zusammenhang zwischen der Drehgeschwindigkeit des Motors und dem Drehwinkel des Motors im Fahrbetriebsmodus,
- Fig. 7: den Zusammenhang zwischen der Drehgeschwindigkeit des Motors und der Drehzeit des Motors im Fahrbetriebsmodus.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

Das beispielhaft zur Erläuterung der Erfindung gewählte selbstbalancierende Fahrzeug 1 weist zwei Fahrzeughälften 2, 3 auf. Die Fahrzeughälften 2, 3 sind zueinander bewegbar derart, daß sie um eine zentrale Drehachse 4 drehbar miteinander verbunden sind. Jeder der beiden Fahrzeughälften 2, 3, sind eine Trittfläche 5, 6 und ein Antriebsrad 7, 8 zugeordnet. Die Trittflächen 5, 6 sind an den Oberseiten der jeweiligen Gehäuseteile 9, 10 der Fahrzeughälften 2, 3 angeordnet. Die Fahrzeughälften 2, 3 sind hinsichtlich ihrer Gehäuseteile 9, 10 in der Fahrzeugmitte 12 voneinander getrennt und lediglich im Fahrzeuginneren über die zentrale Drehachse 4 miteinander verbunden. Die nicht gemeinsamen, voneinander verschiedenen Achsen 13, 14 der beiden Antriebsräder 7, 8 sind dabei koaxial zueinander angeordnet. Die Achsen 13, 14 der Antriebsräder 7, 8 liegen dabei auch koaxial zu der zentralen Drehachse 4. Die Fahrtrichtung 15 des Fahrzeugs 1 bei Geradeausfahrt liegt somit quer zu der zentralen Drehachse 4.

Die beiden Antriebsräder 7, 8 sind unabhängig voneinander antreibbar. Zu diesem Zweck ist jedem der beiden Antriebsräder 7, 8 ein Elektromotor 16, 17 zugeordnet. Jeder dieser beiden Elektromotoren 16, 17 ist einzeln ansteuerbar.

Als Motoren 16, 17 kommen vorzugsweise Nabenmotoren als Direktantriebe zum Einsatz. Vorzugsweise werden dabei Außenläufermotoren eingesetzt. Für jedes Antriebsrad 7, 8 bildet dabei die Radachse 13, 14 zusammen mit dem Stator des Motors 16, 17, beispielsweise in Form eines Elektromagneten, eine feste Einheit, die mit dem Gehäuse 9, 10 des Fahrzeugs 1 verbunden ist, während Reifen und Felge des Rades 7, 8 als Rotor außen um den Stator gelagert laufen.

Bei dem Elektromotoren 16, 17 handelt es sich vorzugsweise um bürstenlose Motoren mit elektronischer Motorsteuerung. Im vorliegenden Fall erfolgt die Ansteuerung über ein gemeinsames elektronisches Steuergerät 18. Das Steuergerät 18 ist mit zwei Sensoreinheiten 19, 10 verbunden, mit deren Hilfe für jede der beiden Trittflächen 5, 6 ermittelt werden kann, ob ein Fahrer darauf steht.

Bei den Sensoreinheiten 19, 20 handelt es sich beispielsweise um Drucksensoren, beispielsweise piezoresistive Drucksensoren, oder um andere geeignete Sensoren zur Ermittlung der Anwesenheit des Fahrers auf einer oder beiden Trittflächen 5, 6, wie z.B. mechanische oder optische Anwesenheitssensoren, beispielsweise Infrarot-Lichtschranken. Die Sensoreinheiten 19, 20 sind vorzugsweise unmittelbar unterhalb der Trittflächen 5, 6 im Inneren der Gehäuseteile 9, 10 oder in unmittelbarer Nähe zu den Trittflächen 5, 6 angeordnet und vorzugsweise dauerhaft, mittels einer Kabelverbindung, mit dem Steuergerät 18 verbunden, so daß eine permanente, ununterbrochene Weitergabe von Anwesenheitsdaten (Trittflächenbelegungsdaten) an das Steuergerät 18 möglich ist.

Das Steuergerät 18 ist derart ausgebildet, daß es in mindestens zwei voneinander verschiedenen Modi betreibbar ist, einem Fahrbetriebsmodus und einem Sicherheitsmodus. Vorzugsweise ist außerdem als dritter Betriebsmodus ein Inbetriebnahmemodus vorgesehen, wie er in der DE 10 2017 119 355 A1 beschrieben ist.

Mit der vorliegenden Erfindung wird ein Sicherheitsmodus als zusätzlicher, von einem Fahrbetriebsmodus und einem Inbetriebnahmemodus verschiedener Betriebsmodus des Fahrzeugs 1 vorgeschlagen. In diesem Sicherheitsmodus wird die Bewegung des fahrerlosen Fahrzeuges mit Hilfe einer Grenzwertüberwachungseinrichtung auf ein Überschreiten wenigstens eines Bewegungsgrenzwertes hin überwacht und die Bewegung des fahrerlosen Fahrzeuges wird durch geeignete Maßnahmen beeinflußt, insbesondere begrenzt, wenn ein solches Überschreiten festgestellt wird. Damit werden ungewollte Bewegungen des fahrerlosen Fahrzeugs verhindert oder auf ein Minimum beschränkt. Unter einem fahrerlosen Fahrzeug wird dabei ein Fahrzeug 1 mit wenigstens einer Trittfläche 5, 6 verstanden, wobei auf keiner dieser Trittflächen 5, 6 ein Fahrer steht.

Besonders einfach umsetzbar ist als geeignete Maßnahme zum Beeinflussen der Bewegung des fahrerlosen Fahrzeugs das Abschalten der beiden Elektromotoren 16, 17. Bei einem Abschalten der Motoren entfällt die zuvor aktive Neigungswinkelkorrektur und das Fahrzeug 1 kippt um. In der Folge berühren Teile des Fahrzeuggehäuses den Boden, wodurch die Bewegungsenergie des Fahrzeugs 1 in andere Energieformen umgewandelt wird und das Fahrzeug 1 zum Stillstand kommt. Das nachfolgend erläuterte Ausführungsbeispiel bedient sich dieser Maßnahme.

In einer bevorzugten Ausführungsform der Erfindung, bei der nach einem Einschalten des Fahrzeugs 1 (Schritt 101) das Aktivieren eines Inbetriebnahmemodus vorgesehen ist (Schritt 102), bei welchem sich das Fahrzeug 1 durch ein Vollziehen von Aufrichtbewegungen 22, 23 selbständig aufrichtet (Schritt 103), insbesondere so, wie in DE 10 2017 119 355 A1 beschrieben, erfolgt nach dem fertigen Aufrichten des Fahrzeuges 1 kein Abschalten des Inbetriebnahmemodus, sondern ein automatischer Wechsel (Umschalten) in den erfindungsgemäßen Sicherheitsmodus (Schritt 105) . Auf diese Weise kann eine sichere Bewegung des Fahrzeugs 1 während des Aufsteigevorgangs gewährleistet werden. Wird hingegen bei der Überprüfung, ob das Aufrichten des Fahrzeugs 1 abgeschlossen ist (Schritt 104), festgestellt, daß ein Aufrichten des Fahrzeugs 1 nicht möglich ist, werden beide Elektromotoren 16, 17 abgeschaltet.

In einer alternativen bevorzugten Ausführungsform der Erfindung ist bei einem Fahrzeug 1, bei dem kein Inbetriebnahmemodus vorgesehen ist, da sich das Fahrzeug 1 bereits in eine aufgerichteten Zustand befindet, beispielsweise weil für ein Aufsteigen des Fahrers auf das Fahrzeug 1 ein separater Aufrichtvorgang aufgrund eines besonders niedrigen Fahrzeugschwerpunkts nicht notwendig ist, der Sicherheitsmodus unmittelbar nach dem Einschalten des Fahrzeugs 1 der aktive Betriebsmodus, d.h. nach Schritt 101 folgt unmittelbar Schritt 105.

In einer bevorzugten Ausführungsform der Erfindung erfolgt dann, wenn sich das Fahrzeug 1 in dem erfindungsgemäßen Sicherheitsmodus befindet, ein automatischer Wechsel (Umschalten) von dem Sicherheitsmodus in den Fahrbetriebsmodus (Schritt 114), wenn mit Hilfe geeigneter, mit dem elektronischen Steuergerät 18 des Fahrzeugs 1 in Verbindung stehenden Sensoren 19, 20 (wie beispielsweise Trittflächensensoren) bei einer Überwachung der Belegung der Trittflächen (Schritt 112) ermittelt wurde (Schritt 113), daß ein Fahrer auf wenigstens einer der Trittflächen 5, 6 des Fahrzeugs 1 steht, mit anderen Worten ein Fahrer mit einem oder beiden Füßen auf das Fahrzeug 1 aufgestiegen ist. Dieser Wechsel des Betriebsmodus erfolgt vorzugsweise unabhängig davon, ob zuvor ein Aufrichten des Fahrzeugs 1, insbesondere in einem Inbetriebnahmemodus, stattgefunden hat oder ob sich das Fahrzeug 1 bereits in einer aufgerichteten, d.h. zum Aufsteigen des Fahrers geeigneten Position befindet, ohne daß zuvor ein Aufrichtvorgang stattgefunden hat.

Im Fahrbetriebsmodus steuert das Steuergerät 18 die beiden Elektromotoren 16, 17 wie üblich so an, daß diese versuchen, durch Antrieb der Antriebsräder 7, 8 die Trittflächen 5, 6 der beiden Fahrzeughälften 2, 3 in eine Lage zu bringen, in denen die Neigungswinkel der Trittflächen 5, 6 zur Horizontalen gleich Null sind (Schritt 115), sich die Trittflächen 5, 6 also in der Waagerechten befinden ("Ausbalancieren"). Zugleich erfolgt das bekannte Ansteuern des Antriebs und der Lenkung des Fahrzeugs 1 durch Gewichtsverlagerung des Fahrers. Je stärker sich die Trittflächen 5, 6 durch eine entsprechende Gewichtsverlagerung der Fahrers in Fahrtrichtung 15 neigen, desto größer sind die Bemühungen des Steuergerätes 18, die Neigungswinkel auszugleichen, was in einer entsprechenden Ansteuerung der Elektromotoren 16, 17 und im Ergebnis in einer Beschleunigung des Fahrzeugs 1 resultiert.

In einer bevorzugten Ausführungsform der Erfindung erfolgt während des Absteigens des Fahrers von dem sich im Fahrbetriebsmodus befindenden Fahrzeug 1, nämlich dann, wenn während der Überwachung der Belegung der Trittflächen 5, 6 des Fahrzeugs 1 (Schritt 116) festgestellt wurde (Schritt 117), daß der Fahrer auf keiner der Trittflächen 5, 6 mehr steht, ein automatischer Wechsel (Umschalten) von dem Fahrbetriebsmodus in den Sicherheitsmodus. Vorzugsweise erfolgt dieser Wechsel des Betriebsmodus unabhängig davon, ob es sich um ein freiwilliges oder unfreiwilliges Absteigen des Fahrers von dem Fahrzeug 1 handelt.

In einer bevorzugten Ausführungsform der Erfindung erfolgt nach einem Wechsel in den Sicherheitsmodus ein Ausbalancieren des Fahrzeugs 1 (Schritt 106A). Das bedeutet, daß in dem Sicherheitsmodus wenigstens einer der beiden Elektromotoren 16, 17 von dem elektronischen Steuergerät 18 derart angesteuert wird, daß das Fahrzeug 1 ausbalanciert wird. Erfolgt der Wechsel in den Sicherheitsmodus im Zuge eines Aufsteigevorgangs, d.h. kommend von Schritt 104, beginnt damit das Ausbalancieren des Fahrzeugs 1 bereits vor dem Besteigen des Fahrzeugs 1 und damit vor dem eigentlichen Fahrbetriebsmodus. Erfolgt der Wechsel in den Sicherheitsmodus im Zuge eines Absteigevorgangs, d.h. kommend von Schritt 117, wird das im Fahrbetriebsmodus stattgefundene Ausbalancieren des Fahrzeugs 1 fortgesetzt.

Unabhängig davon, ob das Aktivieren des Sicherheitsmodus im Zuge des Aufsteigens oder im Zuge des Absteigens stattfindet, hat es sich als vorteilhaft erwiesen, wenn in dem Sicherheitsmodus das Ansteuern des wenigstens einen Elektromotors 16, 17 derart erfolgt, daß das Ausbalancieren im Sicherheitsmodus (Schritt 106A) auf eine andere Weise ausgeführt wird als das Ausbalancieren im Fahrbetriebsmodus (Schritt 115) . Vorzugsweise erfolgt das Ansteuern des wenigstens einen Elektromotors 16, 17 im Sicherheitsmodus derart, daß das Ausbalancieren des Fahrzeugs 1 mit einer geringeren Sensitivität als im Fahrbetriebsmodus erfolgt. Zudem dreht sich dann vorzugsweise der Elektromotor 16, 17 mit gegenüber dem Fahrbetriebsmodus reduzierter Drehgeschwindigkeit.

Unter Sensitivität wird dabei das Ansprechverhalten des Fahrzeugs 1 auf eine Fahrzeugneigung verstanden, genauer gesagt diejenige Empfindlichkeit, mit der das Steuergerät 18 auf eine Neigung des Fahrzeugs 1 anspricht bzw. mit der das Steuergerät 18 auf eine Neigung des Fahrzeugs 1 reagiert. Mit anderen Worten ist im Sicherheitsmodus eine größere Neigung des Fahrzeugs 1 als im Fahrbetriebsmodus erforderlich, damit das Steuergerät 18 die Drehgeschwindigkeit der Elektromotoren 16, 17 entsprechend der Neigungsrichtung (nach vorn oder nach hinten) um einen bestimmten Wert erhöht. Im Sicherheitsmodus drehen sich die Elektromotoren 16, 17, angesteuert von dem Steuergerät 18, bei einem kleinen Neigungswinkel des Fahrzeugs 1 mit einer deutlich niedrigeren Drehgeschwindigkeit als dies bei dem gleichen Neigungswinkel des Fahrzeugs 1 im Fahrbetriebsmodus der Fall wäre.

Das gegenüber dem Fahrbetriebsmodus veränderte Ansprechverhalten mit verringerter Sensitivität im Sicherheitsmodus wird in einer bevorzugten Ausführungsform der Erfindung verwirklicht, indem nach Art eines Filters die Sicherheitsmodus-Motordrehzahlkurve in Abhängigkeit von der Neigung des Fahrzeugs 1 gegenüber der Fahrbetriebsmodus-Motordrehzahlkurve verändert wird, insbesondere indem die Fahrbetriebsmodus-Motordrehzahlkurve mit einer Dämpfungskurve (Dämpfungsfunktion) kombiniert wird derart, daß sich aus der Überlagerung beider Kurven die gewünschte Sicherheitsmodus-Motordrehzahlkurve ergibt.

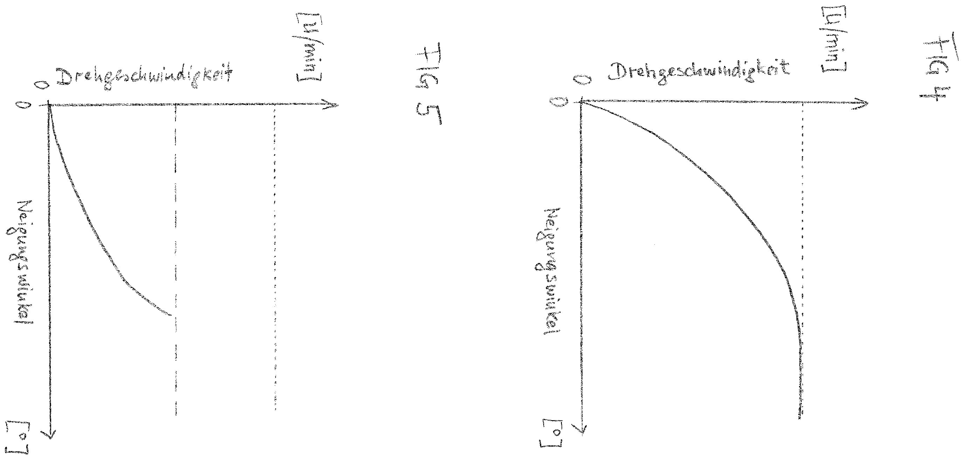

Vorzugsweise unterscheidet sich die Ansteuerung der Elektromotoren 16, 17 durch das elektronische Steuergerät 18 im Sicherheitsmodus von der Ansteuerung der Motoren 16, 17 im Fahrbetriebsmodus sowohl durch eine deutlich geringere Sensitivität, wie ein Vergleich der Kurvenverläufe in den Fig. 4 und 5 zeigt, als auch durch eine geringere maximale Drehgeschwindigkeit. Um zu verhindern, daß trotz verringerter Sensitivität die (in den Figuren als gepunktete horizontale Linie dargestellte) maximal mögliche Drehgeschwindigkeit der Elektromotoren 16, 17 erreicht wird, ist im Sicherheitsmodus eine Drehzahlbegrenzung vorgesehen. Diese Drehzahlbegrenzung kann im einfachsten Fall unmittelbar über einen Motordrehzahlgrenzwert erreicht werden (siehe gestrichelte Linie in Fig. 5), bei dessen Erreichen die beiden Elektromotoren 16, 17 abgeschaltet werden.

Nachdem der Wechsel in den Sicherheitsmodus erfolgt ist, wird gleichzeitig zum Ausbalancieren (Schritt 106A) die Bewegung des fahrerlosen Fahrzeuges 1 überwacht (Schritt 106B). Die Überwachung erfolgt mit Hilfe einer Grenzwertüberwachungseinrichtung 21. Bei der Grenzwertüberwachungseinrichtung 21 handelt es sich vorzugsweise um das elektronische Steuergerät 18 des Fahrzeugs 1, welches dazu ausgebildet ist, die jeweiligen Daten der überwachten Grenzwerte zu erhalten und auszuwerten. Anders ausgedrückt ist die Grenzwertüberwachungseinrichtung 21 durch eine Software- und/oder Hardwarefunktionalität des Steuergerätes 18 verwirklicht. Die Arbeitsweise des Sicherheitsmodus ist vorzugsweise unabhängig davon, ob der Wechsel in den Sicherheitsmodus nach einem Absteigen des Fahrers oder vor einem Aufsteigen des Fahrers erfolgt ist.

In einer bevorzugten Ausführungsform der Erfindung überwacht die Grenzwertüberwachungseinrichtung 21 in Schritt 106B beide Elektromotoren 16, 17 des Fahrzeugs 1 unabhängig voneinander. Überschreitet einer der beiden Elektromotoren 16, 17 wenigstens einen zuvor definierten, die Bewegung des Fahrzeugs 1 beschreibenden Grenzwert (Schritt 107), werden als geeignete Maßnahme zum Beeinflussen der Bewegung des fahrerlosen Fahrzeugs im Sinne des Erfindungsgedankens beide Motoren 16, 17 von dem Steuergerät 18 abgeschaltet (Schritt 108). Hierzu schaltet das Steuergerät 18 die Motorspannung beider Elektromotoren 16, 17 ab.

Bei diesem Bewegungsgrenzwert handelt es sich um einen mit der Bewegung des Fahrzeugs im Zusammenhang stehenden Grenzwert, insbesondere um einen Grenzwert, der eine Eigenschaft der Bewegung des Fahrzeugs beschreibt, wie Drehgeschwindigkeit, Drehwinkel oder Drehzeit.

In einer bevorzugten Ausführungsform der Erfindung handelt es sich bei dem überwachten Grenzwert um eine zuvor festgelegte maximal zulässige Drehgeschwindigkeit der Elektromotoren 16, 17 des fahrerlosen Fahrzeugs 1. Eine solche maximale Drehgeschwindigkeit ist in Fig. 5 mit horizontaler gestrichelter Linie eingezeichnet. So kann eine Abschaltung der Elektromotoren 16, 17 beispielsweise dann erfolgen, wenn sich die Räder des fahrerlosen Fahrzeugs 1 schneller als 100 Umdrehungen/Minute drehen.

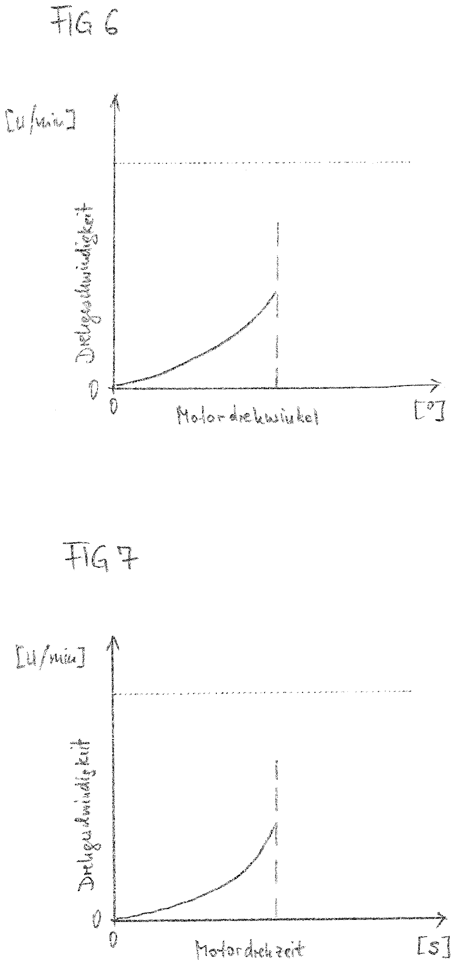

Als ein alternatives oder zusätzliches Kriterium für die Entscheidung zur Abschaltung der Elektromotoren 16, 17 kann als Grenzwert ein maximaler Drehwinkel der Motoren 16, 17 des fahrerlosen Fahrzeugs 1 verwendet werden. Beispielsweise erfolgt in diesem Fall das Begrenzen der Bewegung des Fahrzeugs 1 durch ein Abschalten beider Elektromotoren 16, 17 nach dem Erreichen eines zuvor festgelegten maximalen Drehwinkels durch einen der Motoren 16, 17, z.B. + X° oder - Y° ausgehend von einem bei Beginn des Sicherheitsmodus festgelegten Referenzpunkt, wobei dieser festgelegte Grenz-Drehwinkel einer bestimmten Anzahl von Radumdrehungen des fahrerlosen Fahrzeugs 1 entsprechen kann. Ein solcher Grenz-Drehwinkel ist in Fig. 6 mit horizontaler gestrichelter Linie eingezeichnet. Auf diese Weise wird der Antrieb des Fahrzeugs 1 abgeschaltet, wenn sich das Fahrzeug 1 selbsttätig in Bewegung setzt, wie dies beispielsweise dann der Fall sein kann, wenn sich das fahrerlose Fahrzeug 1 auf einer schiefen Ebene befindet.

Als ein weiteres alternatives oder zusätzliches Kriterium für die Entscheidung zur Abschaltung der Elektromotoren 16, 17 kann als Grenzwert eine maximal zulässige Drehzeit einer der beiden Elektromotoren 16, 17 des fahrerlosen Fahrzeugs 1 verwendet werden. Eine solche maximale Drehzeit ist in Fig. 7 mit vertikaler gestrichelter Linie eingezeichnet. Es erfolgt dann beispielsweise eine Abschaltung beider Elektromotoren 16, 17, wenn einer der beiden Elektromotoren 16, 17 das fahrerlose Fahrzeug 1 mehr als eine Sekunde lang antreibt. So kann eine Abschaltung der Elektromotoren 16, 17 beispielsweise auch dann erfolgen, wenn das Fahrzeug 1 nicht innerhalb von wenigen Sekunden nach Beginn des Sicherheitsmodus von dem Fahrer betreten wird.

Als ein weiteres oder zusätzliches für die Entscheidung zur Abschaltung der Elektromotoren 16, 17 verwendetes Kriterium kann auch ein von dem Vorliegen bestimmter Betriebsparametern der Elektromotoren 16, 17 unabhängiges Kriterium verwendet werden, vorzugsweise die Position bzw. eine Eigenschaft der Position des Fahrzeugs 1. Als ein weiteres oder zusätzliches, von dem Vorliegen bestimmter Betriebsparametern der Elektromotoren 16, 17 unabhängiges Kriterium kann die Art und Weise einer Positionsänderung des fahrerlosen Fahrzeugs 1 verwendet werden, insbesondere die Art und Weise der Änderung der Fahrzeugposition des fahrerlosen Fahrzeugs 1 gegenüber einer Ausgangsposition, in der sich der Fahrer noch mit beiden Füßen auf dem Fahrzeug 1 befand. Geeignete Grenzwerte für Position bzw. Positionsänderung können als Bewegungsgrenzwerte im weiteren Sinne festgelegt werden. Zur Feststellung der Position bzw. der Positionsänderung des Fahrzeugs 1 kann in diesen beiden Fällen eine Positionserkennungseinrichtung, beispielsweise beruhend auf dem GPS-System, im Fahrzeug 1 verbaut und mit der Grenzwertüberwachungseinrichtung 21 bzw. dem Steuergerät 18 verbunden sein.

Die Entscheidung zur Abschaltung der Elektromotoren 16, 17 oder zur Einleitung bzw. Durchführung eine anderen geeigneten Maßnahme zum Beeinflussen der Bewegung des fahrerlosen Fahrzeugs 1 kann auch anhand einer Mehrzahl von Kriterien getroffen werden, wobei es sich um eine Kombination der oben genannten Kriterien oder eine Kombination eines der oben genannten Kriterien mit einem anderen Kriterium handeln kann.

Findet eine Abschaltung der Elektromotoren 16, 17 statt, so ist der Sicherheitsmodus beendet. Im einfachsten Fall schaltet sich das Fahrzeug 1 dann selbsttätig aus und kann erst durch ein erneutes Einschalten (Schritt 101) wieder in Betrieb genommen werden. Alternativ zu einer automatischen Abschaltung kann auch eine manuelle Abschaltung des Fahrzeugs 1 durch den Fahrer vorgesehen sein.

In einer bevorzugten Ausführungsform der Erfindung erfolgt bei Begrenzung der Bewegung des Fahrzeugs 1 durch das Abschalten der Elektromotoren 16, 17 (Schritt 108) ein automatischer Wechsel von dem Sicherheitsmodus in einen Standby-Modus (Schritt 109). Dieser Wechsel in den Standby-Modus findet vorzugsweise unabhängig davon statt, ob sich das Fahrzeug 1 vor dem Sicherheitsmodus in einem Fahrbetriebsmodus oder in einem Inbetriebnahmemodus befand. Vorzugsweise findet in dem Standby-Modus kein Ausbalancieren des Fahrzeugs 1 statt, sondern das Fahrzeug 1 befindet sich in einem Wartezustand, in dem es auch nicht mehr zum Aufsteigen bereit aufgerichtet ist (Schritt 110) .

In einer bevorzugten Ausführungsform der Erfindung, insbesondere dann, wenn ein Inbetriebnahmemodus vorgesehen ist, kann durch eine Aktivierungshandlung des Fahrers, deren Vorliegen in Schritt 111 von dem Steuergerät 18 überwacht wird, eine erneute Wiederinbetriebnahme, d.h. ein Wechsel aus dem Standby-Modus in den Inbetriebnahmemodus (Schritt 102) zum Zweck des erneuten Aufrichtens des Fahrzeugs 1 erfolgen. Bei dieser Aktivierungshandlung handelt es sich vorzugsweise um ein Antippen einer der Trittflächen 5, 6 des Fahrzeugs 1 derart, daß mit Hilfe von Trittbrettsensoren, insbesondere der Sensoreinheiten 19, 20, ein Betreten und/oder eine Belastung einer der Trittflächen 5, 6 feststellbar ist. Bei der Aktivierungshandlung kann es sich auch um das Versenden eines Signals an das Fahrzeug 1 mit Hilfe einer mit dem Fahrzeug 1 verbindbaren, das Steuergerät 18 kontrollierenden Fernbedienung handeln. Nach einem erneuten Aufrichten des Fahrzeugs 1 im Inbetriebnahmemodus (Schritte 103, 104) erfolgt wieder der automatische Wechsel in den Sicherheitsmodus (Schritt 105), um ein ungewolltes Bewegen des Fahrzeugs 1 zu verhindern, und, sobald ein Betreten des Fahrzeugs 1 festgestellt wurde (Schritte 112, 113), ein automatischer Wechsel von dem Sicherheitsmodus in den Fahrbetriebsmodus (Schritt 114). Findet innerhalb eines festgelegten Zeitraums keine Aktivierungshandlung statt, kann es vorgesehen sein, das sich das Fahrzeug 1 selbsttätig ausschaltet.

Bei der Fernbedienung kann es sich beispielsweise um eine mit der Steuereinheit 18 über eine drahtlose Kommunikationsverbindung in Verbindung stehende tragbare Computervorrichtung handeln, wie ein Smartphone oder ein Tablet-Computer, auf dem eine geeignete Bediensoftware für das Steuergerät 18 ausgeführt wird, zu welchem Zweck die Steuereinheit 18 mit einem entsprechenden Funkempfänger oder dergleichen ausgestattet ist.

Aus Sicherheitsgründen ist es in einer bevorzugten Ausführungsform der Erfindung vorgesehen, daß ein Wechsel in den Sicherheitsmodus auch dann erfolgt, wenn eine Überprüfung der Funktionstüchtigkeit der für die Grenzwerterfassung relevanten Sensoren oder Erfassungsmittel ergibt, daß diese Sensoren oder Erfassungsmittel nicht oder nicht korrekt funktionieren und/oder wenn eine Überprüfung der Funktionstüchtigkeit der Grenzwertüberwachungseinrichtung 21 ergibt, daß diese Grenzwertüberwachungseinrichtung 21 nicht oder nicht korrekt funktioniert.

Mit Hilfe des Sicherheitsmodus kann gewährleistet werden, daß das Fahrzeug 1 zu keiner Zeit eine Gefahr für andere Verkehrsteilnehmer, Personen oder Gegenstände wird, unabhängig davon, ob das Fahrzeug 1 auf einem ebenen Untergrund oder bei einer Steigung bzw. einem Gefälle verwendet wird und unabhängig davon, ob das Absteigen des Fahrers gewollt oder ungewollt stattfindet. Es wird mit Hilfe des Sicherheitsmodus sichergestellt, daß das Fahrzeug 1 bei einem nichtebenen Untergrund nicht selbständig wegfährt bzw. nach einem Sturz oder einem ungewollten Absteigen unkontrolliert weiterfährt. In beiden Fällen, insbesondere bei einem unfreiwilligen Absteigen, bei dem das Fahrzeug 1 oftmals durch den Fahrer einen zusätzlichen Stoßimpuls erhält, bestünde sonst die Gefahr, daß das Fahrzeug 1 die zugelassene Höchstgeschwindigkeit überschreitet und sich überschlägt und/oder gegen Hindernisse (Gegenstände, Personen) fährt und es zu Beschädigungen des Fahrzeugs 1 oder der Hindernisse kommt.

In einer besonders bevorzugten Ausführungsform der Erfindung wird der Sicherheitsmodus dann und nur dann aktiviert bzw. erfolgt dann und nur dann ein Wechsel in den Sicherheitsmodus, wenn bei einem aufgerichteten Fahrzeug 1 festgestellt wird, daß keine der Trittflächen 5, 6 von dem Fahrer besetzt sind. Mit anderen Worten ist der Sicherheitsmodus sowohl aus dem Inbetriebnahmemodus heraus als auch aus dem Fahrbetriebsmodus heraus automatisch aktivierbar.

In einer anderen besonders bevorzugten Ausführungsform der Erfindung wird der Sicherheitsmodus dann und nur dann aktiviert bzw. erfolgt dann und nur dann ein Wechsel in den Sicherheitsmodus, wenn bei einem aufgerichteten Fahrzeug 1 festgestellt wird, daß keine der Trittflächen 5, 6 von dem Fahrer besetzt sind, und wenn sich das Fahrzeug 1 zuvor in dem Fahrbetriebsmodus befand. Mit anderen Worten ist dann der Sicherheitsmodus nur aus dem Fahrbetriebsmodus heraus automatisch aktivierbar.

Alternativ zu einem Abschalten der beiden Elektromotoren 16, 17 sind auch andere geeignete Maßnahme zum Beeinflussen der Bewegung des fahrerlosen Fahrzeugs 1 möglich, die an die Stelle des Abschaltens (Schritt 108) treten. Alternativ oder zusätzlich zu Maßnahmen zum Begrenzen der Bewegung des fahrerlosen Fahrzeugs 1 sind auch Maßnahmen zum kontrollierten Bewegen des fahrerlosen Fahrzeugs 1 anwendbar.

Bei einem Abschalten des Antriebs wird in der Folge die vorhandene Bewegungsenergie des Fahrzeugs 1 im wesentlichen durch Reibung umgewandelt, bis das Fahrzeug 1 zum Stillstand kommt. Der nach dem Abschalten der Motoren 16, 17 von dem Fahrzeug 1 zurückgelegte Restweg ist u.a. von der ursprünglichen Bewegungsenergie des Fahrzeugs 1 und von der Form der Fahrzeugkarosserie abhängig, welche bei einem gekippten Fahrzeug 1 die Wechselwirkung mit dem Untergrund beeinflußt. Dabei kann es zu Beschädigungen am Fahrzeug 1 kommen, insbesondere durch Kontakt des Fahrzeuggehäuses und/oder der Schutzbleche mit dem Untergrund, beispielsweise einer asphaltierten Straße. Bei einem Abschalten des Antriebs ist keine weitere Beeinflussung des Fahrzeugs 1 durch den Antrieb möglich. Hingegen kann mit anderen geeigneten Maßnahmen zum Beeinflussen der Bewegung des fahrerlosen Fahrzeugs 1 die Bewegung des Fahrzeugs 1 durch ein gezieltes Abbremsen und/oder Lenken aktiv kontrolliert werden. Ein Abbremsen des fahrerlosen Fahrzeugs 1 erfolgt insbesondere mit dem Ziel, den Stillstand des Fahrzeugs 1 schneller zu erreichen und/oder Beschädigungen am Fahrzeug 1 sowie an anderen Gegenständen und Personen zu vermeiden. Ein Lenken des fahrerlosen Fahrzeugs 1 erfolgt insbesondere mit dem Ziel, die Größe derjenigen Fläche, auf der sich das fahrerlose Fahrzeug 1 bewegt, zu minimieren, und kann, insbesondere dann, wenn es mit einem gezielten Abbremsen verbunden ist, dazu dienen, den Stillstand des Fahrzeugs 1 noch schneller zu erreichen und/oder Beschädigungen am Fahrzeug 1 sowie an anderen Gegenständen und Personen noch besser zu vermeiden.

In einer Ausführungsform der Erfindung wird ein Abbremsen des fahrerlosen Fahrzeugs 1 dadurch hervorgerufen, daß sich das Fahrzeug mehrmals hintereinander entgegen der Fahrtrichtung, d.h. nach hinten, neigt. Durch ein solches rhythmisches Kippen des Fahrzeugs 1, vorzugsweise um einen definierten Kippwinkel, beispielsweise 10°, wie es durch eine geeignete Ansteuerung (Winkelmodulation) der Motoren 16, 17 mit Hilfe des elektronischen Steuergerätes 18 verursacht werden kann, wird eine Gegenbewegung hervorgerufen, die als Drehimpuls entgegen der Rotation der Räder 7, 8 wirkt, so daß der Bewegungsenergie des Fahrzeugs 1 durch eine invertiert-motorische Kraft entgegengewirkt wird. Realisierbar ist diese Variante beispielsweise durch ein geeignetes Ersetzen der Neigungswinkelsollwerte, wie in DE 10 2016 116 329 B4 angegeben, wobei anders als in dem dort beschriebenen Fall, bei dem sich stets ein Fahrer auf dem Fahrzeug befindet, in dem hier vorliegenden Fall eines fahrerlosen Fahrzeugs 1 sehr stark abgebremst werden kann, da nicht zu befürchten ist, daß der Fahrer beim Bremsen nach hinten vom Fahrzeug 1 fällt. Ein Abbremsen des Fahrzeugs 1 kann zusätzlich oder alternativ auch durch eine Realisierung der Funktion einer Motorbremse erfolgen, indem das Steuergerät 18 die Elektromotoren 16, 17 durch geeignete Ansteuerung auf klassische Art und Weise abbremst.

In einer Ausführungsform der Erfindung wird ein Lenken des fahrerlosen Fahrzeugs 1 durch eine geeignete Ansteuerung der Motoren 16, 17 mit Hilfe des elektronischen Steuergerätes 18 hervorgerufen, insbesondere derart, daß das Fahrzeug 1 eine Rechts- oder Linkskurve fährt, vorzugsweise derart, daß sich das Fahrzeug 1 auf einer Kreisbahn mit einem möglichst geringen Durchmesser oder auf einer Kreisbahn mit einem sich verringernden Durchmesser bewegt. Im Ergebnis dieser Kurvenfahrt vollführt das fahrerlose Fahrzeug 1 eine teilweise oder vollständige Drehung oder mehrere Drehungen. Ein solches Lenkmanöver wird vorzugsweise mit einem gezielten Abbremsen, wie oben beschrieben, kombiniert, um eine möglichst sichere Bewegung des fahrerlosen Fahrzeugs 1 bis zu dessen Stillstand zu erreichen.

Sowohl das kontrollierte Abbremsen als auch das kontrollierte Lenken des fahrerlosen Fahrzeugs 1 kann durch eine geeignete Ansteuerung der Elektromotoren 16, 17 durch das vorhandene Steuergerät 18 erfolgen. Lediglich dessen Programmierung muß erforderlichenfalls angepaßt werden.

Alle beschriebenen antriebsunterstützten, d.h. mit eingeschalteten Motoren erfolgenden Maßnahmen können vorteilhafterweise miteinander kombiniert werden. In einer besonders bevorzugten Ausführung der Erfindung erfolgt die Wahl einer geeigneten Maßnahme oder die Wahl einer geeigneten Maßnahmenkombination in Abhängigkeit der Bewegung des Fahrzeugs 1, insbesondere in Abhängigkeit von dem Bewegungsgrenzwert oder in Abhängigkeit von einem anderen Kennwert der Fahrzeugbewegung, insbesondere in Abhängigkeit von der Geschwindigkeit und/oder der Beschleunigung des Fahrzeugs 1.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: Fahrzeug
- 2: erste Fahrzeughälfte
- 3: zweite Fahrzeughälfte
- 4: zentrale Drehachse
- 5: erste Trittfläche
- 6: zweite Trittfläche
- 7: erstes Antriebsrad
- 8: zweites Antriebsrad
- 9: erstes Gehäuseteil
- 10: zweites Gehäuseteil
- 11: (frei)
- 12: Fahrzeugmitte
- 13: erste Achse
- 14: zweite Achse
- 15: Fahrtrichtung
- 16: erster Elektromotor
- 17: zweiter Elektromotor
- 18: elektronisches Steuergerät
- 19: erste Sensoreinheit
- 20: zweite Sensoreinheit
- 21: Grenzwertüberwachungseinrichtung
- 22: Aufrichtbewegung der ersten Fahrzeughälfte
- 23: Aufrichtbewegung der zweiten Fahrzeughälfte
- 101-117: Verfahrensschritte

## Patentansprüche

1. Verfahren zum sicheren Betreiben eines selbstbalancierenden Fahrzeuges (1), welches Fahrzeug (1) wenigstens eine Trittfläche (5, 6) und zwei Antriebsräder (7, 8) aufweist, wobei die beiden Antriebsräder (7, 8) unabhängig voneinander antreibbar sind, zu welchem Zweck jedem der beiden Antriebsräder (7, 8) ein Elektromotor (16, 17) zugeordnet ist, wobei diese Elektromotoren (16, 17) von einem elektronischen Steuergerät (18) ansteuerbar sind, das mit einer Anzahl Sensoreinheiten (19, 20) verbindbar ist, mit deren Hilfe die Trittflächenbelegung ermittelbar ist, **dadurch gekennzeichnet, daß** für den Fall, daß auf keiner der Trittflächen (5, 6) ein Fahrer steht, ein von einem Fahrbetriebsmodus verschiedener Sicherheitsmodus vorgesehen ist, in welchem Sicherheitsmodus die Bewegung des Fahrzeugs (1) mit Hilfe einer Grenzwertüberwachungseinrichtung (21) auf ein Überschreiten wenigstens eines Bewegungsgrenzwertes hin überwacht wird, und eine Maßnahme zum Beeinflussen der Bewegung des fahrerlosen Fahrzeugs (1) durchgeführt wird, wenn ein solches Überschreiten festgestellt wird.

2. Verfahren nach Anspruch 1, **dadurch gekennzeichnet, daß** die Maßnahme zum Beeinflussen der Bewegung des fahrerlosen Fahrzeugs (1) dazu dient, das Fahrzeug (1) so schnell wie möglich zum Stillstand zu bringen, und/oder daß die Maßnahme zum Beeinflussen der Bewegung des fahrerlosen Fahrzeugs (1) so lange durchgeführt wird, bis das Fahrzeug (1) zum Stillstand gebracht wurde.

3. Verfahren nach Anspruch 1 oder 2, **dadurch gekennzeichnet, daß** die Maßnahme zum Beeinflussen der Bewegung des fahrerlosen Fahrzeugs (1) ein Abschalten der Elektromotoren (16, 17) umfaßt.

4. Verfahren nach einem der Ansprüche 1 bis 3, **dadurch gekennzeichnet, daß** die Maßnahme zum Beeinflussen der Bewegung des fahrerlosen Fahrzeugs (1) ein kontrolliertes Abbremsen und/oder ein kontrolliertes Lenken des fahrerlosen Fahrzeugs (1) umfaßt.

5. Verfahren nach einem der Ansprüche 1 bis 4, **dadurch gekennzeichnet, daß** der Bewegungsgrenzwert definiert ist
- durch eine maximal zulässigen Drehgeschwindigkeit zumindest einer der beiden Elektromotoren (16, 17), ohne daß ein Fahrer auf der wenigstens einen Trittfläche (5, 6) steht, und/oder
- durch einen maximal zulässigen Drehwinkel zumindest einer der beiden Elektromotoren (16, 17), ohne daß ein Fahrer auf der wenigstens einen Trittfläche (5, 6) steht, und/oder
- durch eine maximal zulässige Drehzeit zumindest einer der beiden Elektromotoren (16, 17), ohne daß ein Fahrer auf der wenigstens einen Trittfläche (5, 6) steht, und/oder
- durch eine Position und/oder eine Positionsänderung des Fahrzeugs (1).

6. Verfahren nach einem der Ansprüche 1 bis 5, **dadurch gekennzeichnet, daß** das elektronische Steuergerät (18) dann in den Sicherheitsmodus übergeht, wenn sich das fahrerlose Fahrzeug (1) in einem aufgerichteten Zustand befindet, wobei sich das Fahrzeug (1) insbesondere dann in einem aufgerichteten Zustand befindet, wenn es sich vor dem Übergang in den Sicherheitsmodus in dem Fahrbetriebsmodus befand, oder wenn es sich vor dem Übergang in den Sicherheitsmodus in einem von dem Fahrbetriebsmodus verschiedenen Inbetriebnahmemodus befand, in welchem Inbetriebnahmemodus es eine Aufrichtbewegung (22, 23) hin zu einer gewünschten, insbesondere horizontalen Lage wenigstens einer seiner Trittflächen (5, 6) vollführt hat.

7. Verfahren nach einem der Ansprüche 1 bis 6, **dadurch gekennzeichnet, daß** in dem Sicherheitsmodus wenigstens einer der beiden Elektromotoren (16, 17) von dem elektronischen Steuergerät (18) derart angesteuert wird, daß das Fahrzeug (1) ausbalanciert wird.

8. Verfahren nach einem der Ansprüche 1 bis 7, **dadurch gekennzeichnet,**
- **daß** in dem Sicherheitsmodus das Ansteuern des wenigstens einen Elektromotors (16, 17) mit einer verringerten Sensitivität erfolgt,
und/oder
- **daß** in dem Sicherheitsmodus das Ansteuern des wenigstens einen Elektromotors (16, 17) derart erfolgt, daß sich der Elektromotor (16, 17) mit einer gegenüber dem Fahrbetriebsmodus reduzierten Drehgeschwindigkeit dreht.

9. Verfahren nach einem der Ansprüche 1 bis 8, **dadurch gekennzeichnet, daß** bei einem Abschalten der beiden Elektromotoren (16, 17) ein automatischer Übergang von dem Sicherheitsmodus in einen Standby-Modus erfolgt.

10. Verfahren nach Anspruch 9, **dadurch gekennzeichnet, daß** bei Durchführung einer Aktivierungshandlung ein Übergang aus dem Standby-Modus in den Inbetriebnahmemodus erfolgt.

11. Verfahren nach einem der Ansprüche 1 bis 10, **dadurch gekennzeichnet, daß** bei einem Aufsteigen des Fahrers ein automatischer Übergang von dem Sicherheitsmodus in den Fahrbetriebsmodus erfolgt.

12. Selbstbalancierendes Fahrzeug (1), ausgebildet zur Durchführung des Verfahrens nach einem der Ansprüche 1 bis 10, insbesondere aufweisend wenigstens eine Trittfläche (5, 6) und zwei Antriebsräder (7, 8) auf, wobei die beiden Antriebsräder (7, 8) unabhängig voneinander antreibbar sind, zu welchem Zweck jedem der beiden Antriebsräder (7, 8) ein Elektromotor (16, 17) zugeordnet ist, wobei diese Elektromotoren (16, 17) von einem elektronischen Steuergerät (18) ansteuerbar sind, das mit einer Anzahl Sensoreinheiten (19, 20) verbindbar ist, mit deren Hilfe die Trittflächenbelegung ermittelbar ist, und ist **dadurch gekennzeichnet, daß** für den Fall, daß auf keiner der Trittflächen (5, 6) ein Fahrer steht, ein von einem Fahrbetriebsmodus verschiedener Sicherheitsmodus vorgesehen ist, in welchem Sicherheitsmodus die Bewegung des Fahrzeugs (1) mit Hilfe einer Grenzwertüberwachungseinrichtung (21) auf ein Überschreiten wenigstens eines Bewegungsgrenzwertes hin überwacht wird, und eine Maßnahme zum Beeinflussen der Bewegung des fahrerlosen Fahrzeugs (1) durchgeführt wird, wenn ein solches Überschreiten festgestellt wird.

13. Elektronisches Steuergerät für ein selbstbalancierendes Fahrzeug (1), welches Fahrzeug wenigstens eine Trittfläche (5, 6) und zwei Antriebsräder (7, 8) aufweist, wobei die beiden Antriebsräder (7, 8) unabhängig voneinander antreibbar sind, zu welchem Zweck jedem der beiden Antriebsräder (7, 8) ein Elektromotor (16, 17) zugeordnet ist, wobei diese Elektromotoren (16, 17) von einem elektronischen Steuergerät (18) ansteuerbar sind, das mit einer Anzahl Sensoreinheiten (19, 20) verbindbar ist, mit deren Hilfe die Trittflächenbelegung ermittelbar ist, **dadurch gekennzeichnet, daß** das elektronische Steuergerät (18) derart ausgebildet ist, daß für den Fall, daß auf keiner der Trittflächen (5, 6) ein Fahrer steht, ein von einem Fahrbetriebsmodus verschiedener Sicherheitsmodus vorgesehen ist, in welchem Sicherheitsmodus die Bewegung des Fahrzeugs (1) mit Hilfe einer Grenzwertüberwachungseinrichtung (21) auf ein Überschreiten wenigstens eines Bewegungsgrenzwertes hin überwacht wird, und eine Maßnahme zum Beeinflussen der Bewegung des fahrerlosen Fahrzeugs (1) durchgeführt wird, wenn ein solches Überschreiten festgestellt wird.
